# EUROPEAN PATENT SPECIFICATION

(11) **EP 3 699 006 B1**
(45) Date of publication and mention of the grant of the patent: **13.09.2023**
(21) Application number: 20158629.4
(22) Date of filing: 20.02.2020
(51) Int. Cl.: B60J 5/04, E05B 79/04

(54) **COMPRESSIBLE LATCH BRACKET**
KOMPRIMIERBARE VERRIEGELUNGSHALTERUNG
SUPPORT DE VERROU COMPRESSIBLE

(30) Priority: 20.02.2019 US 201916280438
(43) Date of publication of application: 26.08.2020
(73) Proprietor: Brose Schliesssysteme GmbH & Co. KG, 42369 Wuppertal (DE)
(72) Inventor: McGUIRE, Deon, Oxford, MI Michigan 48371 (US); Karges, Oliver, 50737 Köln (DE)
(74) Representative: LKGLOBAL Lorenz & Kopf Patentanwalt Attorney at Law PartG mbB

(56) References cited:
- EP-A1- 3 075 585
- DE-A1- 10 304 203
- FR-A1- 3 052 478
- US-A- 4 898 415
- US-B2- 8 763 308

## Description

### FIELD OF THE INVENTION

The present disclosure relates to a multi-function bracket for use in a motor vehicle door.

### BACKGROUND OF THE INVENTION

Multi-function brackets may provide several functions for a vehicle door. The multi-function bracket may be fastened to the vehicle door of a motor vehicle and include retaining features for a motor vehicle lock, or a window guide for receiving the window pane. Alternatively, the window guide may also be a separate structure of the multi-function bracket to be connected to a carrier plate. The multi-function bracket may also include mounting features for supporting or carrying a handle chassis.

FR 3052478 A1, according to its abstract, describes an assembly for a vehicle door, such as a motor vehicle door. The assembly is mounted on a sheet metal lining of the opening panel. It comprises a window, a window regulator mechanism with a first support fixed to the opening panel, and an opening control handle, in particular an internal control. The assembly further comprises a second support on which the handle is movably mounted, means for fixing the second support to the first support, a sheath stop inserted into a notch hollowed out in the first support, and a shock sensor is placed in an aperture.

DE 10304203 A1, according to its abstract, relates to an arrangement for mounting inside a motor vehicle door with a lock housing and with an external handle holder connected to the lock housing for an external opening handle of the motor vehicle door. The solution is based on improving an arrangement of this type in such a way that a particularly simple assembly of the arrangement is quickly and easily possible, in particular in the case of narrow motor vehicle doors with little assembly space. This is solved in that the outer handle holder is pivotably mounted in such a way that the mounting arrangement can be varied in its width perpendicular to the door plane.

US 8763308 B2, according to its abstract, relates to a structural door module for a motor vehicle door, comprising a carrier plate with a plurality of door hardware components mounted to the dryside and wetside surfaces of the carrier plate. The carrier plate includes a number of preformed components that allow door subsystems to be premounted to the door module and tested prior to mounting the structural door module in the motor vehicle door body. An energy absorbing area is molded into the carrier plate. Additionally, a protruding arm rest support is designed to collapse during a side-impact collision.

### SUMMARY OF THE INVENTION

There is a need to provide an improved fastening of multi-function brackets.

The object of the present invention is solved by the subject-matter of the independent claims; further embodiments are incorporated in the dependent claims.

According to one embodiment, a multi-function bracket for use in a motor vehicle door is provided. The multi-function bracket may include an elongated guide member that defines a slot that is configured to guide a window pane, a handle-chassis bracket extending from the elongated guide member, a slider including a first portion and a second portion, configured to receive a handle chassis, and a compressible member. The compressible member may be coupled to the second portion of the slider and have a compressed state and an uncompressed state. The slider may be configured to translate towards the handle chassis bracket when the compressible member changes from the uncompressed state to the compressed state.

According to another embodiment, a multi-function bracket configured to carry a handle chassis for use in a motor vehicle door is provided. The multi-function bracket may include an elongated guide member that defines a slot that is configured to guide a window pane, a handle-chassis bracket extending from the elongated guide member, and a slider. The slider may include a first portion and a second portion. The first portion may be configured to receive a handle chassis and the second portion may define a mounting aperture configured to receive the handle chassis. The mounting aperture may include a projection that extends into the aperture. The projection may include a first portion extending in a first direction and a second portion extending in a second direction, different than the first direction.

According to yet another embodiment, a vehicle door is provided. The vehicle door may include a handle chassis, a window pane, and a multi-function bracket. The multi-function bracket may include an elongated guide member, a slider, and a compressible member. The guide member defines a slot configured to guide the window pane. The slider may include a first portion and a second portion. The first portion may be configured to receive a handle chassis and the second portion may define a mounting aperture configured to receive the handle chassis. The mounting aperture may include a projection that extends into the aperture. The projection may include a first portion extending in a first direction and a second portion extending in a second direction, different than the first direction. The compressible member may be coupled to the second portion of the slider and have a compressed state and an uncompressed state. The slider may be configured to translate towards the handle chassis bracket when the compressible member changes from the uncompressed state to the compressed state and the handle chassis may be configured to move from a first side of the projection to a second side of the projection towards the handle chassis bracket.

According to the invention, in an example, a multi-function bracket for use in a motor vehicle door is provided. The multi-function bracket comprises an elongated guide member defining a slot configured to guide a window pane. The multi-function bracket also comprises a handle-chassis bracket extending from the elongated guide member. The multi-function bracket further comprises a slider including a first portion and a second portion. The first portion is configured to receive a handle chassis. The multi-function bracket also comprises a compressible member coupled to the second portion of the slider and having a compressed state and an uncompressed state. The slider is configured to translate towards the handle chassis bracket when the compressible member changes from the uncompressed state to the compressed state.

According to the invention, the compressible member defines an aperture and the aperture is configured to receive a protrusion that extends from the handle-chassis bracket.

According to an example, the ledge is supported by a first support member and a second support member. As an option, the ledge defines a retaining flange and the retaining flange and a portion of the handle-chassis bracket is configured to receive the compressible member.

According to an example, the aperture defined by the compressible member includes an elongated portion, a first leg portion, and a second leg portion. The first leg portion and the second leg portion extend in a direction that is orthogonal to the first portion. As an option, the elongated portion of the aperture receives the ledge of the protrusion.

According to an example, the first portion of the slider defines a mounting aperture that includes a first portion and a second portion. The multi-function bracket and a handle chassis are assembled to one another in an installation state, the first portion of the aperture retains the handle chassis, and when the multi-function bracket and the handle chassis are assembled to one another in an installed state, the second portion of the mounting aperture fixes the handle chassis to the slider. As an option, the slider includes an L-shaped retaining member extending into the aperture.

According to an example, the multi-function bracket is configured to carry a handle chassis for use in a motor vehicle door. The second portion of the slider is coupled to the handle-chassis bracket and the first portion of the slider defines a mounting aperture configured to receive the handle chassis and includes a projection extending into the aperture. The projection includes a first portion extending in a first direction and a second portion extending in a second direction, different than the first direction. As an option, the second direction is substantially orthogonal to the first direction.

According to an example, the second portion includes a distal edge and the mounting aperture is spaced apart from the second portion of the slider by a first distance and the mounting aperture is spaced apart from the distal edge by a second distance, less than the first. As an option, alternatively or in addition, the second portion of the slider defines an aperture and the handle-chassis bracket includes a protrusion extending through the aperture defined by the second portion of the slider. As an option, the second portion of the slider includes a plurality of teeth that extend into the aperture and are configured to engage the protrusion.

According to the invention, the compressible member is disposed between the handle chassis bracket and the second portion of the slider.

According to an example, the compressible member is formed of foam.

According to the invention, a vehicle door assembly is provided that comprises a handle chassis, a window pane and a multi-function bracket according to one of the preceding examples. The second portion of the slider is coupled to the handle-chassis bracket and the first portion defines a mounting aperture configured to receive the handle chassis and including a projection extending into the aperture. The projection includes a first portion extending in a first direction and a second portion extending in a second direction, different than the first direction. The compressible member is coupled to the second portion of the slider, and the handle chassis is configured to move from a first side of the projection to a second side of the projection towards the handle chassis bracket.

According to an example, the compressible member includes an upper portion and a lower portion, wherein either the upper portion or the second portion is configured to rotate towards the handle chassis bracket when the compressible member changes from the uncompressed state to the compressed state.

According to an example, the multi-function bracket includes a U-shaped protrusion outwardly extending from the handle-chassis bracket. As an option, the compressible member defines a U-shaped aperture configured to receive the U-shaped protrusion. As a further option, in addition or alternatively, the first portion of the slider defines an aperture configured to receive the U-shaped protrusion.

According to the invention, also a method for assembling a multi-function bracket for use in a motor vehicle door is provided. The method comprises the steps of:
- providing a multi-function bracket comprising an elongated guide member defining a slot configured to guide a window pane, and a handle-chassis bracket extending from the elongated guide member;
- providing a slider including a first portion and a second portion, wherein the first portion is configured to receive a handle chassis, wherein a compressible member is coupled to the second portion of the slider, and wherein the compressible member has a compressed state and an uncompressed state;
- coupling the slider and the compressible member to the chassis bracket; and
- translating the slider towards the handle chassis bracket, while changing the compressible member from the uncompressed state to the compressed state.

When the compressible member changes from the uncompressed state to the compressed state, a width of the multi-function bracket is decreased.

According to an example, for translating the slider, force is applied to a lower end of the compressible member, and the slider and a portion of the compressible member rotate, decreasing the width of the multi-function bracket.

According to an example, for coupling the slider and the compressible member to the chassis bracket, one or more protrusions are extending from the handle-chassis bracket to engage the slider.

In an example, one or more protrusions are provided as a retaining member that extend through an aperture defined by the second portion of the slider. The retaining member are coupling the handle-chassis bracket to the slider.

These and other aspects of the present invention will become apparent from and be elucidated with reference to the embodiments described hereinafter.

### BRIEF DESCRIPTION OF THE DRAWINGS

Figure 1 is a perspective view of a multi-function bracket having a front-door handle chassis and a latch.
Figure 2 is a perspective view of a multi-function bracket having a rear-door handle chassis and a latch.
Figure 3 is a perspective view of an interior portion of a door assembly.
Figure 4 is a perspective view of an exemplary multi-function bracket assembly.
Figure 5 is a partial perspective view of a portion of the exemplary multi-function bracket assembly of Figure 4.
Figure 6 is a perspective view of a portion of an exemplary slider.
Figure 7 is a top view of a portion the exemplary slider of Figure 6.
Figure 8 is a partial perspective view of a portion of the exemplary multi-function bracket of Figure 4.
Figure 9 is a perspective view of an exemplary compressible member.

### DETAILED DESCRIPTION OF EMBODIMENTS

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

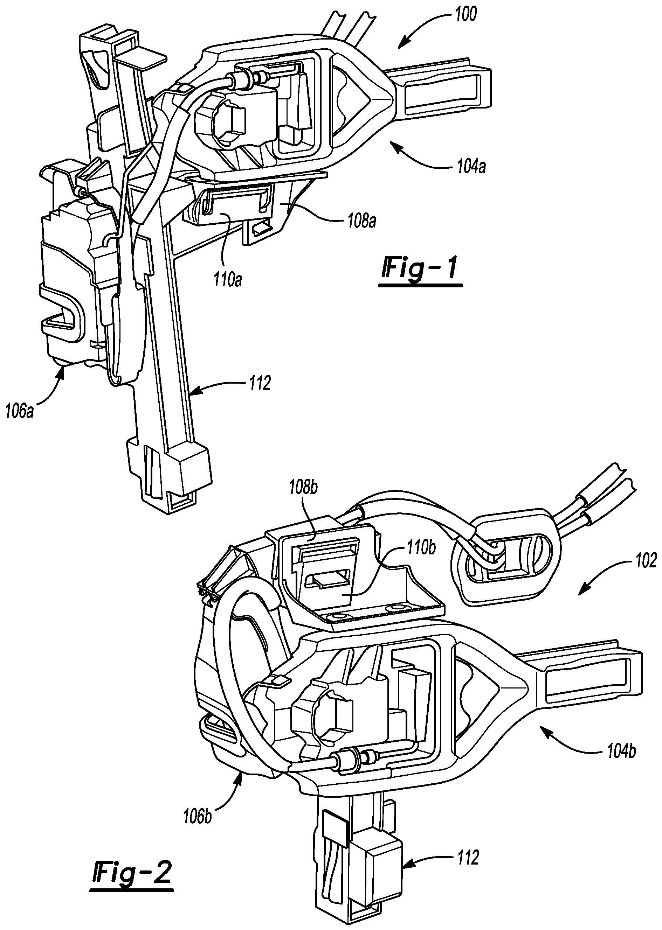

Figure 1 and Figure 2 illustrate perspective views of a front-door latch-mini-module (LMM) assembly 100 and a rear-door LMM assembly 102, respectively. Each of the front-door and rear-door LMM assemblies include a multi-function bracket 112. The multi-function bracket 112 of the front-door LMM assembly 100 may carry a front-door handle chassis 104a and a front-door latch assembly 106a. The front-door handle chassis 104a may be supported by a slider 108a and a compressible member 110a. The multi-function bracket 112 of the rear-door LMM assembly 102 may carry a rear-door handle chassis 104b and a rear-door latch assembly 106b. The rear-door handle chassis 104b may be supported by a slider 108b and a compressible member 110b.

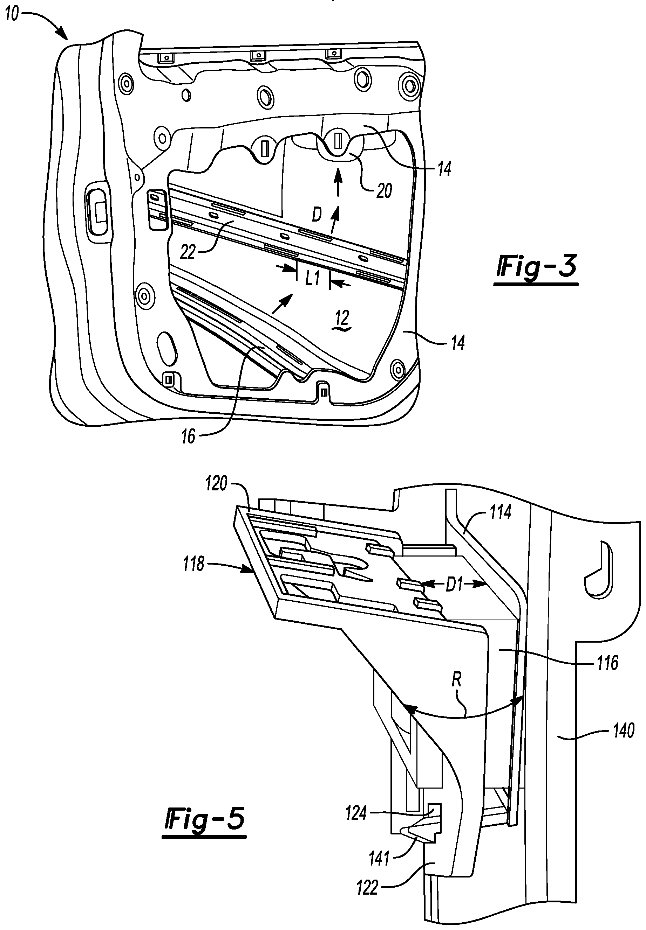

Figure 3 illustrates a perspective view of a vehicle door assembly 10. The vehicle door assembly 10 may include an outer panel 12 that is spaced apart from an inner panel 14. A first cross member 16 and a second cross member 22 may each extend across the vehicle door assembly. The second cross member 22 may be spaced apart from the outer panel 12 by a distance L₁. The outer door panel 12 may define a recessed handle pocket 20 that is configured to receive the front-door LMM assembly 100 or rear-door LMM assembly 102. To install the front-door LMM assembly 100 or rear-door LMM assembly 102, one of the assemblies 100, 102 must pass between the outer panel 12 and the second cross member 22, along the directional arrow D.

In one or more embodiments, the front-door LMM assembly 100 or rear-door LMM assembly 102 may have a width of approximately 140 mm. Whereas the narrowest opening defined by the door assembly 10 *e.g.,* L₁, may have a width of 125 mm. The discrepancy between the opening of the door assembly and the front-door LMM assembly 100 or rear-door LMM assembly 102 may be problematic for installing the front-door LMM assembly 100 or rear-door LMM assembly 102 to the recessed handle pocket 20.

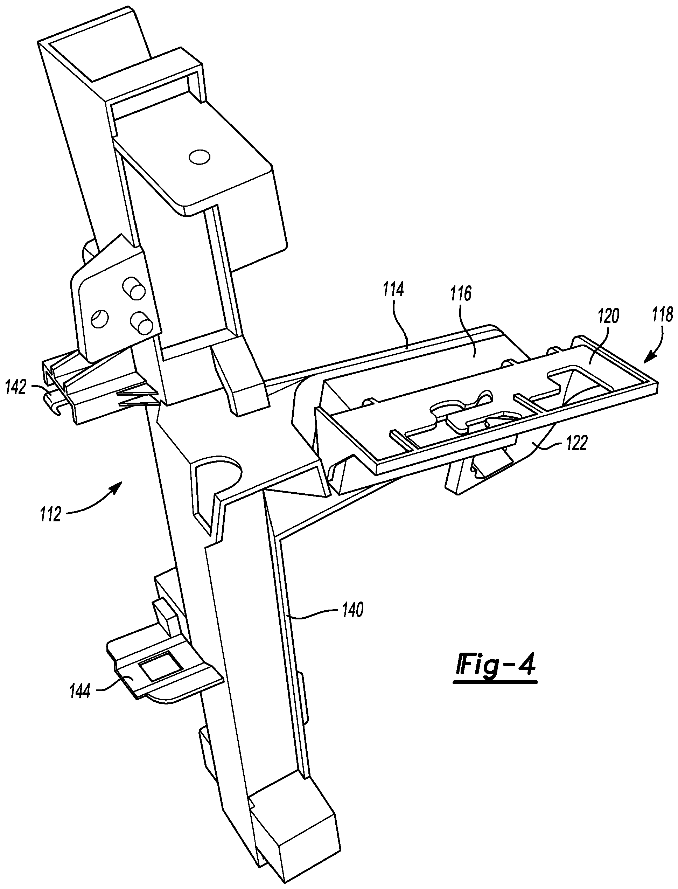

Figure 4 and Figure 5 each illustrate perspective views of an exemplary multi-function bracket assembly 112 according to one or more embodiments of this disclosure. The multi-function bracket assembly 112 includes a guide member 140. The guide member 140 may include a channel that is configured to receive and guide a window pane (not illustrated). A latch receptacle configured to receive either a front-door latch 106a or a rear-door latch 106b may be comprise of an upper retaining member 142 and a lower retaining member 144.

A handle-chassis bracket 114 may extend from the guide member 140. In one or more embodiments, the handle-chassis bracket 114 may extend in a direction that is orthogonal to the guide member 140. A slider 118 and a compressible member 116 may be coupled to the handle chassis bracket 114. The slider 118 may include a first portion 120 and a second portion 122. The first portion 120 of the slider 118 may be configured to carry or support the handle chassis 104a, 104b.

The compressible member 116 may have a compressed state and an uncompressed state. When the compressible member 116 changes from the uncompressed state to the compressed state the slider 118 may move along the directional arrow D₁ towards the handle chassis bracket 114. In one or more embodiments, force applied to a lower end of the compressible member may rotate the slider and a portion of the compressible member along the rotational arrow R. Changing the compressible member 116 from the uncompressed state to the compressed state may decrease the width of the front-door LMM assembly 100 and rear-door LMM assembly 102. The compressible member 116 may be formed of a foam such as a polyether foam.

In one embodiment, the compressible member may be one or more springs configured to change between a compressed and uncompressed state.

One or more protrusions may extend from the handle-chassis bracket 114. As on example, a protrusion, such as a retaining member 141 may extend through an aperture 124 defined by the second portion 122 of the slider 118. The retaining member 141 may couple the handle-chassis bracket 114 to the slider 118.

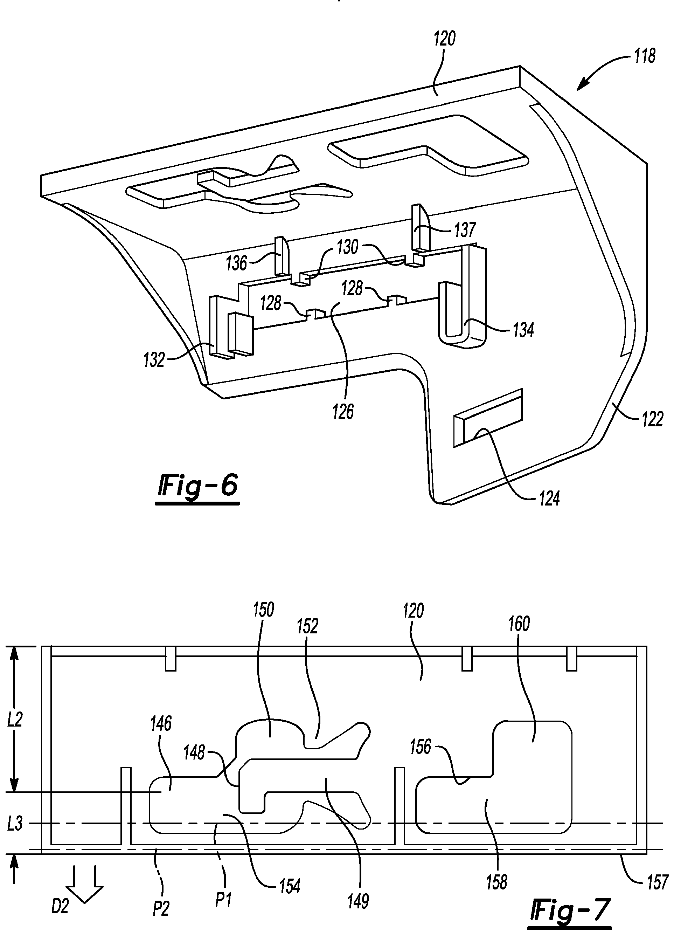

Figure 6 illustrates a perspective view of the slider 118. The second portion 122 of the slider 118 may define an aperture 126 that may be sized to receive one or more protrusions extending from the handle chassis bracket 114. Projections such as protrusion engagement teeth 130, 128 may extend into the aperture and be configured to engage one or more protrusions extending from the handle chassis bracket. For example, a first set of tunable stops 136 and 137 may extend from the second portion of the slider and be configured to act as a stop for a mating component e.g., the handle chassis bracket 114. Also, a second set of tunable stops 132 and 134 may extend from the second portion of the slider and be configured to engage mating component e.g., the handle chassis bracket 114.

Figure 7 illustrates a top view of the first portion 120 of the slider 118. The first portion 120 of the slider 118 may define a first mounting aperture 146 and a second mounting aperture 158. The first mounting aperture 146 may define a first portion 150 and a second portion 154. The first portion 150 may be disposed closer to the second portion 122 of the slider 118 than the second portion 154. The second portion 154 may be disposed closer to a distal edge of the first portion 120 of the slider 118 than the first portion 150 of the aperture 146. For example, the first portion 150 of the first mounting aperture 146 may be spaced apart from the second portion 122 of the slider 118 by a distance L₂. And the second portion 154 of the first mounting aperture 146 may be spaced apart from the distal end 157 by a distance L₃. The first portion 120 may include a projection that extends into the first aperture 146. In one or more embodiments, the projection may be L-shaped and include a first leg 149 and a second leg 148 that is positioned orthogonally the first leg 149.

The second mounting aperture 158 may be L-shaped and include a first portion 160 and a second portion 156. The front or rear handle chassis may be configured to move between the first portion 150 of the first mounting aperture 146 and the first portion 160 of the second mounting aperture 158 to the second portion 154 of the first mounting aperture 146 and the second portion 156 of the second mounting aperture 158. Moving the handle chassis within the first and second portions of the first and second mounting apertures 146, 158 and along directional arrow D₂ may decrease the width of front-door LMM and rear-door LMM.

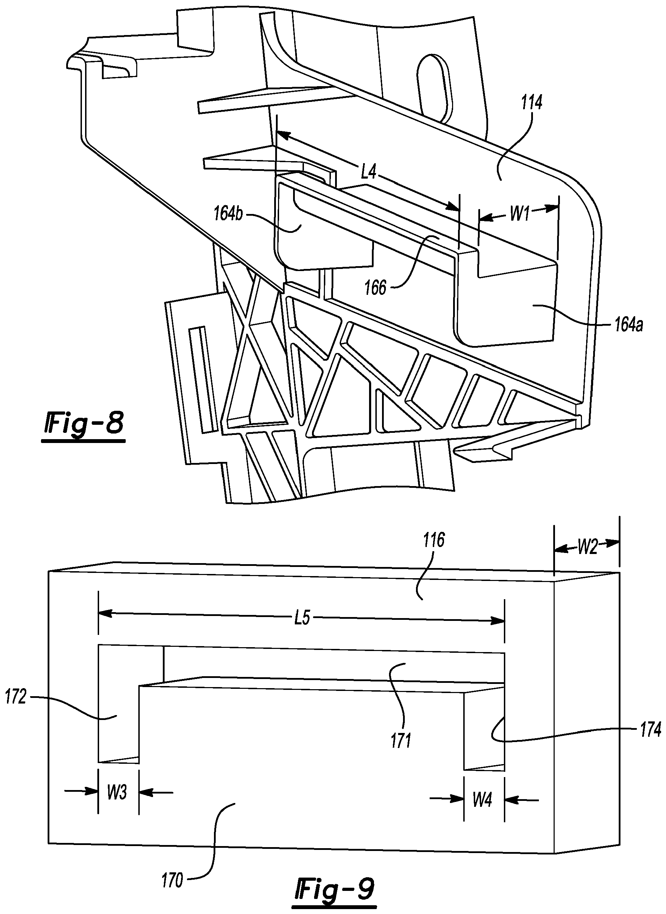

Figure 8 illustrates a perspective view of a portion of the multi-function bracket 112. The handle-chassis bracket 114 include one or more protrusions that may be configured to engage the slider 118, or compressible member 116, or both. In one or more embodiments, the protrusion or protrusions may include a pair of support walls 164a and 164b that may outwardly extend from the handle-chassis bracket 114. The one or more of the support walls 164a and 164b may support a ledge 168 that may extend between the handle-chassis bracket 114 and a flange 166. The support walls may be spaced apart by a distance L₄. The flange 166 may be spaced apart from the handle-chassis bracket 114 by a first width W₁ and retain the slider 118, or compressible member 116, or both. The slider 118 and the compressible member 116 may be sandwiched between the flange 166 and the handle-chassis bracket 114.

Figure 9 illustrates a perspective view of the compressible member 116. The compressible member 116 may have a rectangular cube shape that has a width of W₂. When the compressible member changes between the uncompressed state to the compressed state, the width W₂ may change accordingly. The compressible member may define an aperture 171 and the aperture may be configured to receive one or more of the protrusions that extend from the handle-chassis bracket 114. In one or more embodiments, the aperture 171 may be U-shaped and include a first portion disposed between a second portion 172 and a third portion 174. The second portion 172 may have a width W₃ and the third portion 174 may have a width W₄.

The second portion 172 and the third portion 174 may each be sized to receive the first support wall 164a and the second support wall 164b. For example, the second and third portions 172 and 174 may be configured to engage the first support wall 164a and the second support wall 164b in an interference type fit. The aperture 171 may define a length L₅ that may be sized to receive the protrusions, such as the ledge 166, of the handle-chassis bracket 114.

In another example, not shown, a method for assembling a multi-function bracket for use in a motor vehicle door is provided. The method comprises the steps of:
In a first step, a multi-function bracket is provided comprising an elongated guide member defining a slot configured to guide a window pane, and a handle-chassis bracket extending from the elongated guide member.

In a second step, a slider is provided including a first portion and a second portion, wherein the first portion is configured to receive a handle chassis. A compressible member is coupled to the second portion of the slider. The compressible member has a compressed state and an uncompressed state.

In a third step, the slider and the compressible member are coupled to the chassis bracket.

In a fourth step, the slider is translated towards the handle chassis bracket, while changing the compressible member from the uncompressed state to the compressed state.
when the compressible member changes from the uncompressed state to the compressed state, a width of the multi-function bracket is decreased.

In a further, also not shown example, for translating the slider, force is applied to a lower end of the compressible member, and the slider and a portion of the compressible member rotate, thus decreasing the width of the multi-function bracket.

In a still further, also not shown example, for coupling the slider and the compressible member to the chassis bracket, one or more protrusions are extending from the handle-chassis bracket to engage the slider.

### PARTS LIST

The following is a list of reference numbers shown in the Figures. However, it should be understood that the use of these terms is for illustrative purposes only with respect to one embodiment. And, use of reference numbers correlating a certain term that is both illustrated in the Figures and present in the claims is not intended to limit the claims to only cover the illustrated embodiment.
- 10: vehicle door assembly
- 12: outer door panel
- 14: inner panel
- 16: first cross member
- 20: handle pocket
- 22: second cross member
- 100: front - door LMM assembly
- 102: rear - door LMM assembly
- 112: multi - function bracket assembly
- 114: handle chassis bracket
- 116: compressible member
- 118: slider
- 120: first portion
- 122: second portion
- 124: aperture
- 126: aperture
- 128: protrusion engagement teeth
- 130: protrusion engagement teeth
- 132: tunable stops
- 136: tunable stops
- 140: guide member
- 141: retaining member
- 142: upper retaining member
- 144: retaining member
- 146: first mounting aperture
- 148: second leg
- 149: first leg
- 150: first portion
- 154: second portion
- 157: distal end
- 158: second mounting aperture
- 160: first portion
- 166: flange
- 168: ledge
- 171: aperture
- 172: second portion
- 174: third portion
- 104a: front - door handle chassis
- 104b: rear - door handle chassis
- 106a: front - door latch assembly
- 106b: rear - door latch assembly
- 108a: slider
- 108b: slider
- 110a: compressible member
- 110b: compressible member
- 164a: first support wall
- 164b: second support wall

## Claims

1. A multi-function bracket (112) for use in a motor vehicle door comprising:
- an elongated guide member (140) defining a slot configured to guide a window pane;
- a handle-chassis bracket (114) extending from the elongated guide member;
- a slider (108a, 108b) including a first portion (120) and a second portion (122), wherein the first portion (120) is configured to receive a handle chassis (104a, 104b); and
- a compressible member (110a, 110b; 116) coupled to the second portion (122) of the slider and having a compressed state and an uncompressed state,
wherein the slider translates towards the handle-chassis bracket (114) when the compressible member changes from the uncompressed state to the compressed state;
wherein the compressible member (110a, 110b; 116) is disposed between the handle-chassis bracket (114) and the second portion (122) of the slider; and
wherein the compressible member defines an aperture (171) that is configured to receive a protrusion that extends from the handle-chassis bracket (114).

2. Multi-function bracket (112) of claim 1, wherein the protrusion defines a ledge (168), wherein the ledge is supported by a first support member (164a) and a second support member (164b); and
wherein the ledge defines a retaining flange (166) and wherein the retaining flange and a portion of the handle-chassis bracket (114) is configured to receive the compressible member.

3. Multi-function bracket (112) of claim 1 or 2, wherein the aperture defined by the compressible member includes an elongated portion (171), a first leg portion (172), and a second leg portion (174), and wherein the first leg portion and the second leg portion extend in a direction that is orthogonal to the first portion (120); and
wherein the elongated portion (171) of the aperture receives the ledge (168) of the protrusion.

4. Multi-function bracket (112) of one of the preceding claims, wherein the first portion (120) of the slider defines a mounting aperture (146) including a first portion (150) and a second portion (154), wherein when the multi-function bracket and a handle chassis are assembled to one another in an installation state, the first portion (150) of the aperture retains the handle chassis, and wherein when the multi-function bracket and the handle chassis are assembled to one another in an installed state, the second portion (154) of the mounting aperture fixes the handle chassis to the slider; and
wherein the slider includes an L-shaped retaining member (148, 149) extending into the aperture (146).

5. Multi-function bracket (112) of one of claims 1 to 3, configured to carry a handle chassis, wherein the second portion (122) of the slider is coupled to the handle-chassis bracket (114) and the first portion (120) of the slider defines a mounting aperture (146) configured to receive a handle chassis and includes a projection (148, 149) extending into the aperture (146), and wherein the projection includes a first portion (148) extending in a first direction and a second portion (149) extending in a second direction, different than the first direction; and
wherein, the second direction is substantially orthogonal to the first direction.

6. Multi-function bracket (112) of claim 5, wherein the first portion (120) includes a distal edge and wherein the mounting aperture (146) is spaced apart from the second portion (122) of the slider by a first distance and wherein the mounting aperture (146) is spaced apart from the distal edge by a second distance, less than the first; and/or
wherein the second portion (122) of the slider defines an aperture (126) and wherein the handle-chassis bracket (114) includes a protrusion extending through the aperture (126) defined by the second portion (122) of the slider; and
wherein the second portion (122) of the slider includes a plurality of teeth (128, 130) that extend into the aperture and are configured to engage the protrusion.

7. Multi-function bracket of one of the preceding claims, wherein the compressible member is formed of foam.

8. A vehicle door assembly (10) comprising:
- a handle chassis;
- a window pane; and
- a multi-function bracket (112) according to one of the preceding claims,
wherein the second portion (122) of the slider is coupled to the handle-chassis bracket (114) and the first portion (120) defines a mounting aperture configured to receive the handle chassis and including a projection extending into the aperture, wherein the projection includes a first portion extending in a first direction and a second portion extending in a second direction, different than the first direction, and
wherein the compressible member is coupled to the second portion (122) of the slider, and wherein the handle chassis is configured to move from a first side of the projection to a second side of the projection towards the handle-chassis bracket (114).

9. Vehicle door assembly (10) of claim 8, wherein the compressible member includes an upper portion and a lower portion, wherein either the upper portion or the second portion (122) is configured to rotate towards the handle-chassis bracket (114) when the compressible member changes from the uncompressed state to the compressed state.

10. Vehicle door assembly (10) of claim 8 or 9, wherein the multi-function bracket includes a U-shaped protrusion outwardly extending from the handle-chassis bracket (114); and
wherein the compressible member (116) defines a U-shaped aperture configured to receive the U-shaped protrusion; and
wherein the first portion (120) of the slider defines an aperture configured to receive the U-shaped protrusion.

11. A method for assembling a multi-function bracket according to one of the claims 1-7 for use in a motor vehicle door, the method comprising the steps of:
- providing a multi-function bracket (112) comprising an elongated guide member (140) defining a slot configured to guide a window pane, and a handle-chassis bracket (114) extending from the elongated guide member;
- providing a slider (108a, 108b) including a first portion (120) and a second portion (122), wherein the first portion (120) is configured to receive a handle chassis (104a, 104b), wherein a compressible member (110a, 110b, 116) is coupled to the second portion (122) of the slider, and wherein the compressible member has a compressed state and an uncompressed state;
- coupling the slider (108a, 108b) and the compressible member (110a, 1 10b, 116) to the chassis bracket (114);
- translating the slider (108a, 108b) towards the handle-chassis bracket (114), while changing the compressible member (110a, 110b, 116) from the uncompressed state to the compressed state;
wherein, when the compressible member (110a, 110b, 116) changes from the uncompressed state to the compressed state, a width of the multi-function bracket (112) is decreased.

12. Method of claim 11, wherein, for translating the slider (108a, 108b), force is applied to a lower end of the compressible member (1 10a, 110b, 116), and the slider (108a, 108b) and a portion of the compressible member (110a, 110b, 116) rotate, decreasing the width of the multi-function bracket (112).

13. Method of claim 11 or 12, wherein, for coupling the slider (108a, 108b) and the compressible member(110a, 110b, 116) to the chassis bracket, one or more protrusions are extending from the handle-chassis bracket (114) to engage the slider (108a, 108b).

## Patentansprüche

1. Eine Multifunktionshalterung (112) zum Verwenden in einer Kraftfahrzeugtür, aufweisend:
- ein längliches Führungselement (140), das einen Schlitz definiert, der zum Führen einer Fensterscheibe konfiguriert ist;
- eine Griffgehäusehalterung (114), die sich von dem länglichen Führungselement aus erstreckt;
- einen Schieber (108a, 108b) umfassend einen ersten Abschnitt (120) und einen zweiten Abschnitt (122), wobei der erste Abschnitt (120) konfiguriert ist, ein Griffgehäuse (104a, 104b) aufzunehmen; und
- ein komprimierbares Element (110a, 110b; 116), das an den zweiten Abschnitt (122) des Schiebers gekoppelt ist und einen komprimierten Zustand und einen unkomprimierten Zustand aufweist,
wobei sich der Schieber in Richtung der Griffgehäusehalterung (114) verschiebt, wenn das komprimierbare Element von dem nicht unkomprimierten Zustand in den komprimierten Zustand wechselt;
wobei das komprimierbare Element (110a, 110b; 116) zwischen der Griffgehäusehalterung (114) und dem zweiten Abschnitt (122) des Schiebers angeordnet ist; und
wobei das komprimierbare Element eine Öffnung (171) definiert, die konfiguriert ist, einen Vorsprung aufzunehmen, der sich von der Griffgehäusehalterung (114) erstreckt.

2. Multifunktionshalterung (112) nach Anspruch 1, wobei der Vorsprung eine Leiste (168) definiert, wobei die Leiste von einem ersten Stützelement (164a) und einem zweiten Stützelement (164b) getragen wird; und
wobei die Leiste einen Rückhalteflansch (166) definiert und wobei der Rückhalteflansch und ein Abschnitt der Griffgehäusehalterung (114) konfiguriert sind, das komprimierbare Element aufzunehmen.

3. Multifunktionshalterung (112) nach Anspruch 1 oder 2, wobei die durch das komprimierbare Element definierte Öffnung einen länglichen Abschnitt (171), einen ersten Schenkelabschnitt (172) und einen zweiten Schenkelabschnitt (174) umfasst, und wobei sich der erste Schenkelabschnitt und der zweite Schenkelabschnitt in einer Richtung erstrecken, die orthogonal zu dem ersten Abschnitt (120) ist; und
wobei der längliche Abschnitt (171) der Öffnung die Leiste (168) des Vorsprungs aufnimmt.

4. Multifunktionshalterung (112) nach einem der vorhergehenden Ansprüche, wobei der erste Abschnitt (120) des Schiebers eine Montageöffnung (146) definiert, die einen ersten Abschnitt (150) und einen zweiten Abschnitt (154) umfasst, wobei, wenn die Multifunktionshalterung und ein Griffgehäuse in einem Installationszustand aneinander montiert sind, der erste Abschnitt (150) der Öffnung das Griffgehäuses festhält, und wobei, wenn die Multifunktionshalterung und das Griffgehäuse in einem installierten Zustand aneinander montiert sind, der zweite Abschnitt (154) der Montageöffnung das Griffgehäuse an dem Schieber befestigt; und
wobei der Schieber ein L-förmiges Halteelement (148, 149) umfasst, das sich in die Öffnung (146) erstreckt.

5. Multifunktionshalterung (112) nach einem der Ansprüche 1 bis 3, die konfiguriert ist, ein Griffgehäuse zu tragen, wobei der zweite Abschnitt (122) des Schiebers an die Griffgehäusehalterung (114) gekoppelt ist und der erste Abschnitt (120) des Schiebers eine Montageöffnung (146) definiert, die konfiguriert ist, ein Griffgehäuse aufzunehmen, und einen Überstand (148, 149) umfasst, der sich in die Öffnung (146) erstreckt, und wobei der Überstand einen ersten Abschnitt (148) umfasstz, der sich in eine erste Richtung erstreckt, und einen zweiten Abschnitt (149), der sich in eine zweite Richtung erstreckt, die sich von der ersten Richtung unterscheidet; und
wobei die zweite Richtung im Wesentlichen orthogonal zu der ersten Richtung ist.

6. Multifunktionshalterung (112) nach Anspruch 5, wobei der erste Abschnitt (120) einen distalen Rand umfasst und wobei die Montageöffnung (146) von dem zweiten Abschnitt (122) des Schiebers durch einen ersten Abstand beabstandet ist und wobei die Montageöffnung (146) von dem distalen Rand durch einen zweiten Abstand beabstandet ist, der kleiner als der erste ist; und/oder
wobei der zweite Abschnitt (122) des Schiebers eine Öffnung (126) definiert und wobei die Griffgehäusehalterung (114) einen Vorsprung umfasst, der sich durch die Öffnung (126) erstreckt, die durch den zweiten Abschnitt (122) des Schiebers definiert ist; und
wobei der zweite Abschnitt (122) des Schiebers eine Vielzahl von Zähnen (128, 130) umfasst, die sich in die Öffnung erstrecken und konfiguriert sind, in den Vorsprung einzugreifen.

7. Multifunktionshalterung nach einem der vorhergehenden Ansprüche, wobei das komprimierbare Element aus Schaumstoff gebildet ist.

8. Eine Fahrzeugtüranordnung (10), aufweisend:
- ein Griffgehäuse;
- eine Fensterscheibe; und
- eine Multifunktionshalterung (112) nach einem der vorhergehenden Ansprüche,
wobei der zweite Abschnitt (122) des Schiebers an die Griffgehäusehalterung (114) gekoppelt ist und der erste Abschnitt (120) eine Montageöffnung definiert, die konfiguriert ist, das Griffgehäuse aufzunehmen, und einen Überstand umfasst, der sich in die Öffnung erstreckt, wobei der Überstand einen ersten Abschnitt umfasst, der sich in eine erste Richtung erstreckt, und einen zweiten Abschnitt, der sich in eine zweite Richtung erstreckt, die sich von der ersten Richtung unterscheidet, und
wobei das komprimierbare Element an den zweiten Abschnitt (122) des Schiebers gekoppelt ist, und wobei das Griffgehäuse konfiguriert ist, sich von einer ersten Seite des Überstands zu einer zweiten Seite des Überstands in Richtung der Griffgehäusehalterung (114) zu bewegen.

9. Fahrzeugtüranordnung (10) nach Anspruch 8, wobei das komprimierbare Element einen oberen Abschnitt und einen unteren Abschnitt umfasst, wobei entweder der obere Abschnitt oder der zweite Abschnitt (122) konfiguriert ist, sich in Richtung der Griffgehäusehalterung (114) zu drehen, wenn das komprimierbare Element von dem unkomprimierten Zustand in den komprimierten Zustand wechselt.

10. Fahrzeugtüranordnung (10) nach Anspruch 8 oder 9, wobei die Multifunktionshalterung einen U-förmigen Vorsprung umfasst, der sich von der Griffgehäusehalterung (114) nach außen erstreckt; und
wobei das komprimierbare Element (116) eine U-förmige Öffnung definiert, die konfiguriert ist den U-förmigen Vorsprung aufzunehmen; und
wobei der erste Abschnitt (120) des Schiebers eine Öffnung definiert, die konfiguriert ist den U-förmigen Vorsprung aufzunehmen.

11. Ein Verfahren zum Zusammenbau einer Multifunktionshalterung nach einem der Ansprüche 1-7 zum Verwenden in einer Kraftfahrzeugtür, wobei das Verfahren die folgenden Schritte aufweist:
- Bereitstellen einer Multifunktionshalterung (112), die ein längliches Führungselement (140), das einen Schlitz definiert, der zum Führen einer Fensterscheibe konfiguriert ist, und eine Griffgehäusehalterung (114) aufweist, die sich von dem länglichen Führungselement erstreckt;
- Bereitstellen eines Schiebers (108a, 108b) umfassend einen ersten Abschnitt (120) und einen zweiten Abschnitt (122), wobei der erste Abschnitt (120) konfiguriert ist, ein Griffgehäuse (104a, 104b) aufzunehmen, wobei ein komprimierbares Element (110a, 110b, 116) mit dem zweiten Abschnitt (122) des Schiebers gekoppelt ist und wobei das komprimierbare Element einen komprimierten Zustand und einen unkomprimierten Zustand aufweist;
- Koppeln des Schiebers (108a, 108b) und des komprimierbaren Elements (110a, 110b, 116) an die Gehäusehalterung (114);
- Verschieben des Schiebers (108a, 108b) in Richtung der Griffgehäusehalterung (114), während das komprimierbare Element (110a, 110b, 116) von dem unkomprimierten Zustand in den komprimierten Zustand wechselt;
wobei, wenn das komprimierbare Element (110a, 110b, 116) von dem unkomprimierten Zustand in den komprimierten Zustand wechselt, eine Breite der Multifunktionshalterung (112) verringert wird.

12. Verfahren nach Anspruch 11, wobei zum Verschieben des Schiebers (108a, 108b) eine Kraft auf ein unteres Ende des komprimierbaren Elements (110a, 110b, 116) ausgeübt wird und der Schieber (108a, 108b) und ein Abschnitt des komprimierbaren Elements (110a, 110b, 116) sich drehen, wodurch die Breite der Multifunktionshalterung (112) verringert wird.

13. Verfahren nach Anspruch 11 oder 12, wobei zum Koppeln des Schiebers (108a, 108b) und des komprimierbaren Elements (110a, 110b, 116) an die der Gehäusehalterung ein oder mehrere Vorsprünge von der Griffgehäusehalterung (114) abstehen, um mit dem Schieber (108a, 108b) in Eingriff zu gelangen.

## Revendications

1. Support multifonctionnel (112) destiné à être utilisé dans une porte de véhicule automobile et comprenant :
- un élément de guidage allongé (140) définissant une fente configurée pour guider une vitre;
- un support poignée-châssis (114) s'étendant à partir de l'élément de guidage allongé;
- une glissière (108a, 108b) comprenant une première partie (120) et une deuxième partie (122), dans laquelle la première partie (120) est configurée pour recevoir un châssis de poignée (104a, 104b); et
- un élément compressible (110a, 110b ; 116) couplé à la deuxième partie (122) du glissière et ayant un état comprimé et un état non comprimé,
dans lequel la glissière se déplace vers le support poignée-châssis (114) lorsque l'élément compressible passe de l'état non comprimé à l'état comprimé;
dans lequel l'élément compressible (110a, 110b ; 116) est disposé entre le support poignée-châssis (114) et la deuxième partie (122) du glissière; et
dans lequel l'élément compressible définit une ouverture (171) configurée pour recevoir une protubérance qui s'étend du support poignée-châssis (114).

2. Support multifonctionnel (112) de la revendication 1, dans lequel la protubérance définit un rebord (168), dans lequel le rebord est supporté par un premier élément de support (164a) et un second élément de support (164b); et
dans lequel le rebord définit une bride de retenue (166) et dans lequel la bride de retenue et une partie du support poignée-châssis (114) sont configurées pour recevoir l'élément compressible.

3. Support multifonctionnel (112) de la revendication 1 ou 2, dans lequel l'ouverture définie par l'élément compressible comprend une partie allongée (171), une première partie de jambe (172), et une deuxième partie de jambe (174), et dans lequel la première partie de jambe et la deuxième partie de jambe s'étendent dans une direction qui est orthogonale à la première partie (120) ; et
dans laquelle la partie allongée (171) de l'ouverture reçoit le rebord (168) de la protubérance.

4. Support multifonctionnel (112) de l'une des revendications précédentes, dans lequel la première partie (120) de la glissière définit une ouverture de montage (146) comprenant une première partie (150) et une deuxième partie (154), dans laquelle, lorsque le support multifonctionnel et un châssis de poignée sont assemblés l'un à l'autre dans un état d'installation, la première partie (150) de l'ouverture retient le châssis de poignée , et lorsque le support multifonctionnel et le châssis de poignée sont assemblés l'un à l'autre dans un état installé, la deuxième partie (154) de l'ouverture de montage fixe le châssis de poignée à la glissière; et
dans lequel la glissière comprend un élément de retenue en forme de L (148, 149) s'étendant dans l'ouverture (146).

5. Support multifonctionnel (112) de l'une des revendications 1 à 3, configuré pour porter un châssis de poignée, dans lequel la deuxième partie (122) du glissière est couplée au support poignée-châssis (114) et la première partie (120) du glissière définit une ouverture de montage (146) configurée pour recevoir un châssis de poignée et comprend une saillie (148, 149) s'étendant dans l'ouverture (146), et dans lequel la saillie comprend une première partie (148) s'étendant dans une première direction et une deuxième partie (149) s'étendant dans une deuxième direction, différente de la première direction; et
dans laquelle la seconde direction est sensiblement orthogonale à la première direction.

6. Support multifonctionnel (112) de la revendication 5, dans lequel la première partie (120) comprend un bord distal et dans lequel l'ouverture de montage (146) est espacée de la deuxième partie (122) du glissière d'une première distance et dans lequel l'ouverture de montage (146) est espacée du bord distal d'une deuxième distance, inférieure à la première ; et/ou
dans laquelle la deuxième partie (122) du glissière définit une ouverture (126) et dans laquelle le support poignée-châssis (114) comprend une protubérance s'étendant à travers l'ouverture (126) définie par la deuxième partie (122) du glissière; et
dans lequel la deuxième partie (122) du glissière comprend une pluralité de dents (128, 130) qui s'étendent dans l'ouverture et sont configurées pour s'engager dans la protubérance.

7. Support multifonctionnel de l'une des revendications précédentes, dans lequel l'élément compressible est formé de mousse.

8. Ensemble de porte de véhicule (10) comprenant
- un châssis de poignée;
- une vitre; et
- un support multifonctionnel (112) selon l'une des revendications précédentes,
dans lequel la deuxième partie (122) du glissière est couplée au support poignée-châssis (114) et la première partie (120) définit une ouverture de montage configurée pour recevoir le châssis de poignée et comprenant une saillie s'étendant dans l'ouverture, dans lequel la saillie comprend une première partie s'étendant dans une première direction et une deuxième partie s'étendant dans une deuxième direction, différente de la première direction, et
dans lequel l'élément compressible est couplé à la deuxième partie (122) du glissière, et dans lequel le châssis de poignée est configuré pour se déplacer d'un premier côté de la saillie à un deuxième côté de la saillie vers le support poignée-châssis (114).

9. Ensemble de porte de véhicule (10) de la revendication 8, dans lequel l'élément compressible comprend une partie supérieure et une partie inférieure, dans lequel la partie supérieure ou la deuxième partie (122) est configurée pour tourner vers le support poignée-châssis (114) lorsque l'élément compressible passe de l'état non comprimé à l'état comprimé.

10. Ensemble de porte de véhicule (10) de la revendication 8 ou 9, dans lequel le support multifonctionnel comprend une protubérance en forme de U s'étendant vers l'extérieur à partir du support poignée-châssis (114) ; et
dans lequel l'élément compressible (116) définit une ouverture en forme de U configurée pour recevoir la protubérance en forme de U; et
dans lequel la première partie (120) du glissière définit une ouverture configurée pour recevoir la protubérance en forme de U.

11. Procédé d'assemblage d'un support multifonctionnel selon l'une des revendications 1 à 7 pour une utilisation dans une porte de véhicule automobile, le procédé comprenant les étapes suivantes :
- Fournir un support multifonctionnel (112) comprenant un élément de guidage allongé (140) définissant une fente configurée pour guider une vitre, et un support poignée-châssis (114) s'étendant à partir de l'élément de guidage allongé;
- Fournir un glissière (108a, 108b) comprenant une première partie (120) et une deuxième partie (122), dans laquelle la première partie (120) est configurée pour recevoir un châssis de poignée (104a, 104b), dans laquelle un élément compressible (110a, 110b, 116) est couplé à la deuxième partie (122) du glissière, et dans laquelle l'élément compressible a un état comprimé et un état non comprimé;
- Couplage du glissière (108a, 108b) et l'élément compressible (110a, 110b, 116) au support de châssis (114);
- Translation du glissière (108a, 108b) vers le support poignée-châssis (114), tout en faisant passer l'élément compressible (110a, 110b, 116) de l'état non comprimé à l'état comprimé;
dans lequel, lorsque l'élément compressible (110a, 110b, 116) passe de l'état non comprimé à l'état comprimé, la largeur du support multifonctionnel (112) diminue.

12. Méthode de la revendication 11, dans laquelle, pour déplacer le glissière (108a, 108b), une force est appliquée à une extrémité inférieure de l'élément compressible (110a, 110b, 116), et le glissière (108a, 108b) et une partie de l'élément compressible (110a, 110b, 116) tournent, diminuant la largeur du support multifonction (112).

13. Méthode de la revendication 11 ou 12, dans laquelle, pour coupler le glissière (108a, 108b) et l'élément compressible (110a, 110b, 116) au support de châssis, une ou plusieurs protubérances s'étendent du support poignée-châssis (114) pour s'engager dans la glissière (108a, 108b).
